# EUROPÄISCHE PATENTSCHRIFT

(11) **EP 3 631 596 B1**
(45) Veröffentlichungstag und Bekanntmachung des Hinweises auf die Patenterteilung: **11.01.2023**
(21) Anmeldenummer: 18724199.7
(22) Anmeldetag: 08.05.2018
(51) Int. Cl.: G05G 1/10, D06F 34/30

(54) **BEDIENELEMENT FÜR EIN HAUSHALTSGERÄT UND HAUSHALTSGERÄT**
CONTROL ELEMENT FOR A HOUSEHOLD APPLIANCE AND HOUSEHOLD APPLIANCE
ÉLÉMENT DE COMMANDE POUR APPAREIL MÉNAGER ET APPAREIL MÉNAGER

(30) Priorität: 30.05.2017 DE 102017209056
(43) Veröffentlichungstag der Anmeldung: 08.04.2020
(73) Patentinhaber: BSH Hausgeräte GmbH, 81739 München (DE)
(72) Erfinder: FISCHER, Manuel, 83135 Schechen (DE); FLEISSNER, Reinhard, 83352 Altenmarkt a.d. Alz (DE); OSENSTÄTTER, Anton, 83278 Traunstein (DE)
(86) Internationale Anmeldenummer: PCT/EP2018/061849
(87) Internationale Veröffentlichungsnummer: WO 2018/219600

(56) Entgegenhaltungen:
- WO-A1-2012/139926
- WO-A1-2017/084681
- DE-A1-102014 201 430
- GB-A- 2 388 904
- US-A1- 2002 139 651

## Beschreibung

Die vorliegende Erfindung betrifft ein Bedienelement für ein Haushaltsgerät und ein Haushaltsgerät mit einem solchen Bedienelement.

Haushaltsgeräte werden herkömmlich mit Drehwahleinrichtungen, wie beispielsweise Drehknebeln, bedient. Dabei können mehrere Drehknebel vorgesehen sein, die miteinander kombiniert einen Betriebsmodus für das Haushaltsgerät festlegen. So kann zum Beispiel vorgesehen sein, dass ein Backofen einen ersten Drehknebel zur Anwahl einer bestimmten Gartemperatur und einen zweiten Drehknebel zur Anwahl einer Betriebsvariante, wie Heißluft, Oberhitze oder Unterhitze, aufweist. Durch Drehen des jeweiligen Drehknebels in eine vorgegebene Winkelstellung wird eine entsprechende Auswahl getätigt. Beispielsweise ist auf dem Drehknebel ein Pfeil vorgesehen und umlaufend um den Drehknebel, zum Beispiel auf einer Bedienblende, sind Symbole für die auswählbaren Positionen angeordnet. Derartige Drehknebel werden aus Kostengründen beispielsweise aus Kunststoff gefertigt. Dies hat einerseits den Vorteil, dass auch lichtdurchlässige Materialien zur Verfügung stehen, um den Drehknebel von hinten zu beleuchten, was eine sichere Auswahl ermöglicht, auch wenn der Raum, in dem das Haushaltsgerät betrieben wird, dunkel ist. Andererseits haben Kunststoffe den Nachteil, dass sie eine begrenzte Temperaturbeständigkeit als auch eine begrenzte Resistenz gegen chemische Reinigungsmittel aufweisen. Dies kann zu einer vorzeitigen Alterung eines solchen Drehknebels führen.

Aus der DE 10 2014 201 430 A1 ist eine Drehwahleinrichtung mit einer hinterleuchtbaren stirnseitigen Anzeigefläche bekannt. Die WO 2012/139926 A1 beschreibt einen Bedienknebel aus Kunststoff für ein thermisches Haushaltsgerät, welcher den Eindruck eines metallenen Bedienknebels vermittelt.

Vor diesem Hintergrund besteht eine Aufgabe der vorliegenden Erfindung darin, ein verbessertes Bedienelement für ein Haushaltsgerät bereitzustellen.

Demgemäß wird ein Bedienelement für ein Haushaltsgerät mit einem Grundkörper aufweisend ein Material, welches eine Matrix und einen in die Matrix eingebetteten Füllstoff umfasst, vorgeschlagen. Der Füllstoff hat einen Gewichtsanteil von 5% - 30% an dem Material und ist zum Erhöhen einer mechanischen Festigkeit des Materials und zum Erhöhen einer chemischen Resistenz des Materials eingerichtet. Die Matrix ist eine transparente Kunststoffmatrix und der Füllstoff ist ferner dazu eingerichtet, eine vorgegebene Lichtstreuung von in das Material eingekoppeltem Licht bereitzustellen.

Ein solches Bedienelement weist den Vorteil auf, dass eine Lebensdauer des Bedienelements vergrößert ist. Dies gilt insbesondere dann, wenn das Bedienelement häufig mit Lösungsmitteln und/oder Reinigungsmitteln in Kontakt ist.

Das Bedienelement ist beispielsweise als ein Drehknebel ausgebildet. Dann weist der Grundkörper beispielsweise eine runde Form auf, wobei eine Aufnahme für eine Drehachse vorgesehen sein kann. Der Drehknebel wird beispielsweise auf eine entsprechende Drehachse des zu bedienenden Haushaltsgeräts gesteckt oder montiert. Ferner kann der Drehknebel verschiedene weitere Elemente aufweisen, die auf oder an dem Grundkörper angeordnet sind, wie beispielsweise eine Beschichtung und/oder ein Ziffernblatt.

Der Grundkörper wird beispielsweise in einem Spritzgussverfahren mit dem verflüssigten Material hergestellt. Es ist auch denkbar, dass der Grundkörper aus einem massiven Materialblock gefräst wird. Ferner sind verschiedene weitere Bearbeitungsschritte zum Herstellen des Grundkörpers und/oder zum Herstellen des Bedienelements aus dem Grundkörper möglich.

Unter einer Matrix wird insbesondere derjenige Anteil des Materials verstanden, in welchen der Füllstoff eingelagert ist. Die Matrix umfasst insbesondere Kunststoffe, wie beispielsweise Polyamid. Unter einem Füllstoff ist grundsätzlich jeglicher Zusatz zu der Matrix zu verstehen, der nicht aus dem Matrixmaterial besteht. Die Matrix ist insbesondere dazu geeignet, einen zusammenhängenden Körper beliebiger Gestalt zu formen.

Ein Gewichtsanteil von 5% - 30% bedeutet, dass beispielsweise ein Kilogramm des Materials 50 - 300 g des Füllstoffs enthält, wobei der restliche Anteil insbesondere das Matrixmaterial ist.

Der Füllstoff ist beispielsweise ein anorganischer Stoff, wie Glas, Mineralien und/oder Metall. Der Füllstoff ist insbesondere in Form kleiner Körper, wie Kugeln, unregelmäßig geformte Stücke, Plättchen und/oder Fasern, mit einem Durchmesser unter 1 mm. Insbesondere Fasern können dabei eine Länge von einigen Zentimetern erreichen.

Der Füllstoff ist zum Erhöhen der mechanischen Festigkeit des Materials eingerichtet. Die mechanische Festigkeit ist dabei insbesondere durch den Elastizitätsmodul gegeben, welcher im internationalen Einheitensystem als ein Druck, beispielsweise in Pa, N/mm² oder kg/(ms²) angegeben wird. Der Elastizitätsmodul kann auch als mechanische Spannung bezeichnet werden. Das mit dem Füllstoff angereicherte Material hat demnach einen größeren Elastizitätsmodul als ein Material, das nur aus dem Matrixmaterial besteht.

Der Füllstoff ist ferner zum Erhöhen der chemischen Resistenz des Materials, insbesondere gegenüber Reinigungsmitteln, wie beispielsweise haushaltsüblichen Reinigungsmitteln, eingerichtet. Unter der chemischen Resistenz wird insbesondere eine Widerstandfähigkeit des Materials gegen Chemikalien verstanden. Ein Material ist umso widerstandsfähiger, je weniger es seine Materialeigenschaften bei Einwirkung und/oder Kontakt mit einer Chemikalie verändert. Die Materialeigenschaften umfassen dabei die mechanischen, physikalischen als auch chemischen Eigenschaften des Materials. Der Elastizitätsmodul ist beispielsweise eine mechanische Eigenschaft. Die Wärmeleitfähigkeit oder optische Eigenschaften sind Beispiele für physikalische Eigenschaften. Die Zusammensetzung ist ein Beispiel für eine chemische Eigenschaft.

Unter haushaltsüblichen Reinigungsmitteln werden insbesondere Reinigungsmittel verstanden, die, insbesondere in Deutschland und Europa, frei verkäuflich und erhältlich sind. Inhaltsstoffe dieser Reinigungsmittel umfassen Alkohole, wie Ethanol, Alkalien, wie Ammoniak, Natriumhydroxid und/oder Kaliumhydroxid, Tenside, Aceton, Benzin und/oder Glykole. Die chemische Resistenz des Materials gegenüber einem solchen Reinigungsmittel ist beispielsweise erhöht, wenn das Material gegenüber einem Inhaltsstoff des Reinigungsmittels erhöht ist.

Aufgrund der erhöhten chemischen Resistenz ist insbesondere eine Empfindlichkeit des Materials für spannungsrissauslösende Medien oder Chemikalien reduziert. Spannungsrissauslösende Medien verursachen beispielsweise eine inhomogene Weichmachung des Materials. Spannungsrisse (Englisch: environmental stress cracking, ESC) entstehen beispielsweise in Materialien, die eingefrorene mechanische Spannungen aufweisen. Das ist beispielsweise bei fast allen aus thermoplastischen Kunststoffen hergestellten Materialien der Fall, da sich solche mechanischen Spannungen beim Abkühlen der Schmelze nicht vermeiden lassen. Kommt ein solches Material mit einer Chemikalie in Kontakt, die beispielsweise lokal den Elastizitätsmodul herabsetzt, so kann das dazu führen, dass die eingefrorene mechanische Spannung größer als der Elastizitätsmodul wird und sich dort ein sogenannter Spannungsriss ausbildet. Spannungsrisse können aber auch durch eine von außen auf das Material einwirkende Kraft entstehen, insbesondere wenn das Material in Kontakt mit einem entsprechenden Medium ist oder es kürzlich war. Spannungsrisse können in verschiedensten Größenordnungen auftreten, insbesondere im Bereich von Mikrometern bis hin zu Millimetern. Spannungsrisse lassen das Bauteil, in dem sie auftreten, wie beispielsweise das Bedienelement, vorzeitig altern und/oder führen zu einem frühzeitigen Bauteilversagen. Dies kann durch das Bedienelement aus dem Material verbessert werden.

Die Norm ISO 22088 beschreibt beispielsweise Testverfahren, mit dem Kunststoffkörper auf ihre Anfälligkeit zur Spannungsrissbildung bei Kontakt mit Chemikalien hin untersucht werden können.

Gemäß einer Ausführungsform des Bedienelements besteht der Grundkörper aus dem Material. Das heißt, dass der Grundkörper dieser Ausführungsform keine weiteren Bestandteile umfasst.

Die Matrix ist eine transparente Kunststoffmatrix und der Füllstoff ist ferner dazu eingerichtet, eine vorgegebene Lichtstreuung von in das Material eingekoppeltem Licht bereitzustellen.

Eine Kunststoffmatrix umfasst beispielsweise Kunststoffe wie Polymethylmethacrylat (PMMA), Polyamid (PA), Polycarbonat (PC), Polyethylen (PE), Polypropylen (PP) und weitere Polymere. Die Polymere bilden insbesondere eine amorphe Matrix aus, das heißt, es existiert keine Fernordnung, wie sie in Kristallen vorliegt. Man kann auch sagen, die Polymere sind Glasbildner, deren fester Zustand jenem einer unterkühlten Flüssigkeit entspricht. Durch Erhitzen einer solchen Kunststoffmatrix über eine von den enthaltenen Kunststoffen abhängige Glasübergangstemperatur wird die Kunststoffmatrix plastisch formbar.

Unter transparent wird vorliegend verstanden, dass ein Körper aus der Matrix für Licht, insbesondere mit Wellenlängen im sichtbaren Bereich, transparent ist. Das heißt, dass Licht einen solchen Körper durchstrahlt und dabei nur wenig abgeschwächt wird. Die Abschwächung von Licht durch die transparente Kunststoffmatrix liegt insbesondere unter 50%, vorteilhaft unter 20% und besonders vorteilhaft unter 10% beim Durchstrahlen einer 1 mm dicken Platte aus der Kunststoffmatrix, ohne Berücksichtigung von Reflexionsverlusten.

Die Streuung von Licht in dem Material wird insbesondere durch den Füllstoff verursacht. Streuung bedeutet beispielsweise, dass ein Lichtstrahl, der eine bestimmte Ausbreitungsrichtung aufweist, abgelenkt oder umgelenkt wird. Dabei tritt insbesondere keine Absorption auf. Die Streuung wird durch Brechung oder Refraktion von Licht an Füllstoff-Partikeln in der Matrix verursacht. Wenn ein Lichtstrahl in dem Material auf ein Füllstoff-Partikel mit gekrümmter Oberfläche, wie eine Faser, trifft, wird der Lichtstrahl beim Übergang von der Matrix in die Faser in Abhängigkeit des Verhältnisses der Brechungsindizes des FüllstoffMaterials und der Kunststoffmatrix und des Einfallswinkels gebrochen. Dadurch wird der Lichtstrahl von seiner ursprünglichen Ausbreitungsrichtung abgelenkt.

Insbesondere kann ein Lichtstrahl beim Durchstrahlen des aus dem Material bestehenden Grundkörpers mehrfach gebrochen werden. Dadurch sieht es für einen Betrachter des, beispielsweise von hinten beleuchteten, Grundkörpers so aus, als würde der Grundkörper selbst leuchten. Je häufiger der Lichtstrahl gebrochen wird, umso weniger ist erkennbar, an welcher Stelle oder in welche Richtung Licht in den Grundkörper eingekoppelt wird. In vorteilhafter Weise lässt sich somit der gesamte Grundkörper mit einer einzigen Lichtquelle homogen ausleuchten, ohne dass die Lichtquelle selbst erkennbar ist. Aufgrund von Inhomogenitäten in der Kunststoffmatrix kann ein Lichtstrahl auch an einer solchen Inhomogenität gestreut werden.

Wie stark die Lichtstreuung eines solchen Materials ist, lässt sich beispielsweise über die mittlere freie Weglänge, die eine Lichtstrahl bzw. ein Photon in dem Material hat, bevor es auf einen Füllstoff-Partikel trifft und gebrochen wird, beschreiben. Die mittlere freie Weglänge entspricht dabei einem Mittelwert des Weges, den ein Lichtstrahl oder Photon geradlinig, das heißt ohne gebrochen zu werden, in dem Material zurücklegt. Ferner kann ein totaler oder differenzieller Streuquerschnitt für ein solches Material bestimmt werden, der eine Stärke der Lichtstreuung beschreibt.

Gemäß einer weiteren Ausführungsform des Bedienelements besteht die transparente Kunststoffmatrix aus Polyamid.

Gemäß einer weiteren Ausführungsform des Bedienelements besteht der Füllstoff aus Glasfasern, Glaskugeln, Kohlefasern, Aramidfasern, Pigmenten und/oder mineralischen Füllstoffen.

Die chemische Struktur und Zusammensetzung des Füllstoffs hat insbesondere einen Einfluss auf die Materialeigenschaften. Auch die geometrische Form des Füllstoffs kann beispielsweise einen Einfluss auf die mechanischen, physikalischen und/oder chemischen Eigenschaften des Materials haben. Fasern weisen insbesondere eine längliche Form, die abschnittsweise gerade oder gekrümmt verläuft, auf. Mineralische Füllstoffe, wie beispielsweise Schichtsilikate, können auch eine plättchenartige Form aufweisen.

Gemäß einer weiteren Ausführungsform des Bedienelements weist die mechanische Festigkeit des Materials ein Elastizitätsmodul größer als 3300 MPa auf.

Gemäß einer weiteren Ausführungsform des Bedienelements weist das Material eine dauerhafte Temperaturbeständigkeit von über 100°C, insbesondere bis zu 110°C, und eine kurzzeitige Temperaturbeständigkeit von über 120°C auf.

Unter der dauerhaften Temperaturbeständigkeit wird vorliegend insbesondere verstanden, dass das Material, wenn es dauerhaft, das heißt beispielsweise für eine längere Zeitdauer, wie beispielsweise einige Stunden oder Tage, auf über 100°C, insbesondere bis zu 110°C, erhitzt wird, seine charakteristischen Eigenschaften beibehält und durch die thermische Belastung nicht zerstört wird. Damit ist sichergestellt, dass das Bedienelement seine Funktion auch in Betriebszuständen, bei denen solche hohen Temperaturen auftreten, uneingeschränkt beibehält. Ferner weist das Material eine kurzzeitige Temperaturbeständigkeit von über 120°C auf. Unter kurzzeitig wird vorliegend beispielsweise eine Zeitspanne von einigen Sekunden oder Minuten verstanden.

Gemäß einer weiteren Ausführungsform des Bedienelements besteht der Füllstoff aus Glasfasern mit einem Durchmesser von 10 - 20 µm.

Glasfasern bestehen selbst aus Glas, insbesondere SiO₂, und sind ein sehr günstiger Füllstoff. Somit kann das Bedienelement kostengünstig hergestellt werden.

Gemäß einer weiteren Ausführungsform des Bedienelements hat der Füllstoff einen Gewichtsanteil von 10% - 20% an dem Material.

Gemäß einer weiteren Ausführungsform des Bedienelements hat der Füllstoff einen Gewichtanteil von 12% - 17% an dem Material.

Gemäß einer weiteren Ausführungsform des Bedienelements ist eine Beleuchtungseinrichtung zum Hinterleuchten des Grundkörpers vorgesehen.

In dieser Ausführungsform kann das Bedienelement von hinten, das heißt insbesondere von einer dem Benutzer abgewandten und einem Haushaltsgerät zugewandten Seite des Bedienelements, beleuchtet werden. Dies ermöglicht vorteilhaft ein schnelleres und einfacheres Erfassen einer aktuellen Auswahlstellung des Bedienelements und ermöglicht auch die Verwendung des Bedienelements in dunkler Umgebung. Ein Abschatten einer externen Beleuchtungseinrichtung ist hierbei auch wirksam verhindert. Zudem ergibt sich einem Benutzer ein hochwertiges Erscheinungsbild eines solchen Bedienelements.

Die Beleuchtungseinrichtung kann als eine Glühbirne, eine LED, eine Gasentladungslampe, eine Leuchtstoffröhre und/oder ein Laser ausgebildet sein. Die Beleuchtungseinrichtung kann ferner als breitbandige Lichtquelle, die ein breites Spektrum an Wellenlängen erzeugt, oder als schmalbandige Lichtquelle, die ein schmales Spektrum an Wellenlängen erzeugt, bis hin zu einer monochromatischen Lichtquelle, die im Wesentlichen nur eine Wellenlänge erzeugt, ausgebildet sein. Breitbandig bedeutet beispielsweise eine spektrale Bandbreite von über 100 nm, schmalbandig bedeutet beispielsweise eine spektrale Bandbreite von unter 100 nm und monochromatisch bedeutet beispielsweise eine Bandbreite von unter 10 nm.

Die Beleuchtungseinrichtung kann beispielweise in einer dafür vorgesehenen Aushöhlung in dem Grundkörper angeordnet sein, wobei zwei elektrisch leitenden Kontakte zur Stromversorgung der Beleuchtungseinrichtung an dem Grundkörper vorgesehen sind. Alternativ und/oder zusätzlich kann die Beleuchtungseinrichtung einen Lichtleiter umfassen, mittels dem beispielsweise Licht einer entfernt angeordneten Lichtquelle an den Grundkörper herangeführt wird. Der Lichtleiter kann ferner zu Strahlformung, wie beispielsweise Fokussierung, des Lichts eingerichtet sein.

Das von der Beleuchtungseinrichtung erzeugte Licht koppelt insbesondere in den Grundkörper ein. In dem Grundkörper wird das Licht insbesondere von dem Füllstoff gestreut, so dass eine Abstrahlrichtung des Lichts in Abhängigkeit des totalen Streuquerschnitts oder der mittleren freien Weglänge verschleiert wird. Damit ergibt sich ein diffuser Leuchteindruck des gesamten Grundkörpers und damit auch des Bedienelements. Insbesondere liegt somit keine Richtungsabhängigkeit des Lichts vor.

Gemäß einer weiteren Ausführungsform des Bedienelements ist eine Einrichtung zum Bereitstellen von Mustern, insbesondere Zahlen, Buchstaben und/oder Symbole, auf dem Grundkörper vorgesehen. Die Muster sind durch in den Grundkörper eingekoppeltes Licht beleuchtbar.

Beispielsweise ist die Einrichtung ein Metallblech, insbesondere eine Edelstahlblech, welches frontseitig auf dem Bedienelement befestigt ist und welches stellenweise durchbrochen ist, beispielsweise durch Bohren oder Fräsen, um an diesen Stellen die Sicht auf den Grundkörper freizugeben. Die Einrichtung kann beispielsweise auch eine Lackschicht umfassen, die zumindest abschnittsweise auf den Grundkörper aufgebracht ist. Insbesondere kann die Einrichtung ferner dazu eingerichtet sein, mittels farbigen Schichten und/oder farbigen Elementen eine Lichtfarbe des in den Grundkörper eingekoppelten Lichts in vorgegebener Weise zu beeinflussen. Beispielsweise weisen unterschiedliche Symbole eine unterschiedliche Farbe auf. Alternativ und/oder zusätzlich kann die Einrichtung als eine Filterscheibe mit einer Grafik ausgebildet sein. Beispielsweise ist die Filterscheibe aus einem transparenten Material gebildet, das Licht nicht streut. Beispielsweise ist die Filterscheibe auf zumindest einer Seite mit einer lichtundurchlässigen Lackschicht beschichtet, welche stellenweise entfernt ist, um die Grafik darzustellen. Dabei kann auch vorgesehen sein, dass die Lackschicht stellenweise eine vorbestimmte dünne Schichtdicke aufweist, so dass ein bestimmter Anteil des Lichts die dünne Lackschicht durchstrahlt, womit unterschiedliche Lichtintensitäten an unterschiedlichen Stellen der Filterscheibe darstellbar sind.

Eine solche Einrichtung kann insbesondere die Verwendung des Bedienelements vereinfachen, da eine Auswahlstellung verdeutlicht und damit intuitiver wird.

Gemäß einer weiteren Ausführungsform des Bedienelements ist das Bedienelement als ein Schieberegler, ein Bedienknebel, ein Drehknebel, ein Taster, ein Schalter und/oder ein Knopf ausgebildet.

Ferner wird ein Haushaltsgerät mit zumindest einem Bedienelement vorgeschlagen. Das Bedienelement ist gemäß einer der vorgenannten Ausführungsformen ausgebildet.

Gemäß einer Ausführungsform des Haushaltsgeräts ist dieses als ein Gargerät und/oder ein wasserführendes Haushaltsgerät ausgebildet ist.

Beispielsweise ist das Haushaltsgerät als ein Backofen, eine Mikrowelle, ein Herd und/oder ein Dampfgarer, ein Geschirrspüler, eine Waschmaschine, ein Wasserkocher, eine Kaffeemaschine und/oder eine Ablufthaube ausgebildet.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Ansicht eines Ausführungsbeispiels eines Bedienelements für ein Haushaltsgerät;
- Fig. 2: zeigt schematisch einen Ausschnitt einer planparallelen Schicht eines Materials aus einer Matrix mit in die Matrix eingebettetem Füllstoff, in welche Licht eingekoppelt wird;
- Fig. 3: zeigt schematisch ein Material mit einem bestimmten totalen Streuquerschnitt; und
- Fig. 4: zeigt eine schematische Ansicht eines Ausführungsbeispiels eines Haushaltsgeräts mit einem Bedienelement.

In den Figuren sind gleiche oder funktionsgleiche Elemente mit denselben Bezugszeichen versehen worden, sofern nichts anderes angegeben ist.

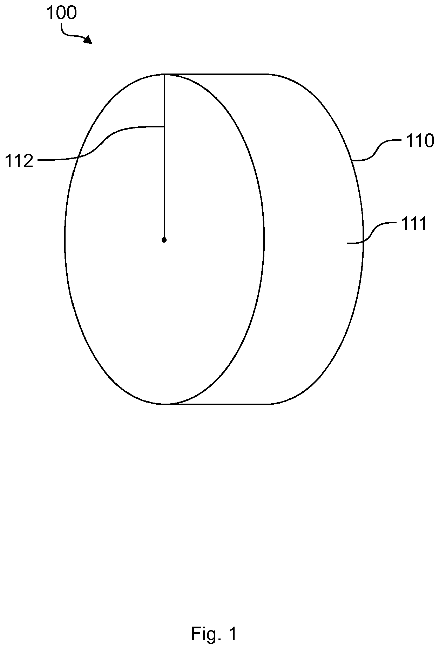

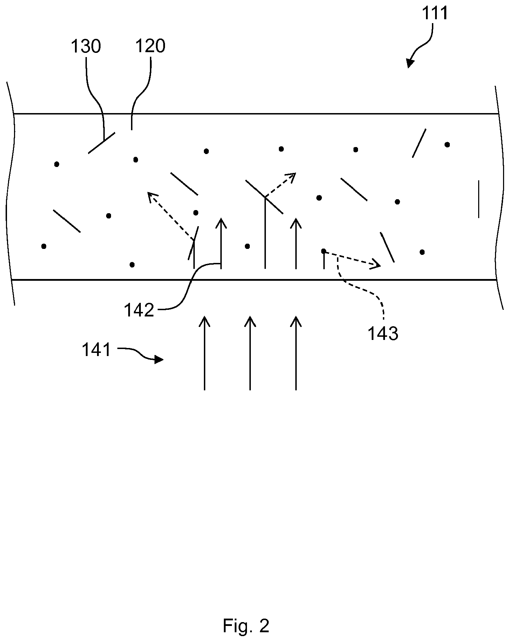

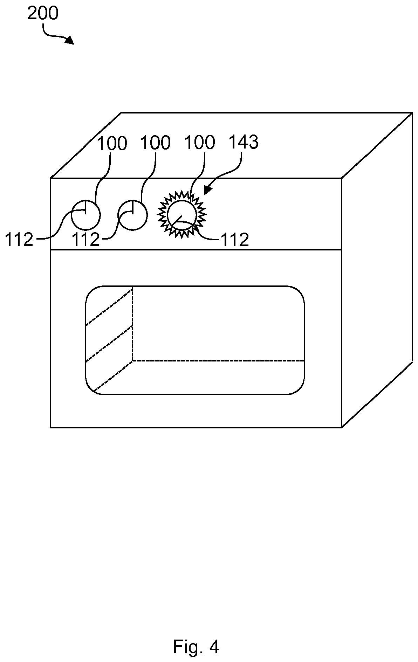

Fig. 1 zeigt eine schematische Ansicht eines Ausführungsbeispiels eines Bedienelements 100 für ein Haushaltsgerät 200 (siehe Fig. 4), wie beispielsweise einen Backofen. Das Bedienelement 100 der Fig. 1 ist als ein Drehknebel ausgebildet. Der Drehknebel 100 weist einen runden Grundkörper 110 auf, der aus einem Material 111 gebildet ist, welches aus einer Matrix 120 (siehe Fig. 2) und Füllstoff 130 (siehe Fig. 2) besteht. Auf einer Vorderseite des Grundkörpers 110 ist eine Einrichtung 112 angeordnet, die vorliegend als ein Zeiger ausgebildet ist und mittels der ein Benutzer des Drehknebels 100 einen Drehgrad des Drehknebels 100 in Bezug auf eine Nullstellung ablesen kann.

Das Material 111 des Grundkörpers 110 besteht vorliegend aus einer Matrix 120 aus Polyamid mit einem Gewichtsanteil von 15% des Füllstoffs 130, wobei der Füllstoff 130 hier Glasfasern sind. Das Polyamid 120 weist den Vorteil auf, dass es transparent ist, eine gute chemische Resistenz gegenüber haushaltsüblichen Reinigungsmitteln sowie vorteilhafte mechanische und physikalische Eigenschaften aufweist. Durch die Verwendung von 15% Glasfasern 130 wird insbesondere die chemische Resistenz des Materials 111 verbessert, insbesondere wird die Anfälligkeit des Materials 111 gegenüber spannungsrissbildenden Medien reduziert. Ferner wird die mechanische Belastbarkeit des Materials 111 verbessert. Das Material 111 weist vorteilhaft einen Elastizitätsmodul von zumindest 3300 MPa auf. Weitere vorteilhafte Eigenschaften des Materials 111 werden nachfolgend anhand der Fig. 2 erläutert.

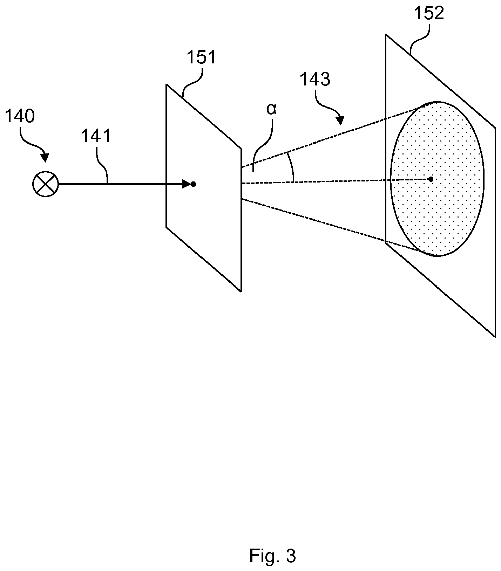

Fig. 2 zeigt schematisch einen Ausschnitt einer planparallelen Schicht des Materials 111 aus einer Matrix 120 aus Polyamid und in das Polyamid 120 eingebettetem Füllstoff 130, welches beispielsweise für den Grundkörper 110 des Bedienelements 100 der Fig. 1 verwendet werden kann. Der Füllstoff 130 sind Glasfasern und Glaskugeln. Die Glasfasern 130 und die Glaskugeln 130 sind statistisch in dem Polyamid 120 verteilt. Aus Gründen der Übersicht sind die Glasfasern 130 hier als Stäbchen dargestellt, sie können aber auch einen gekrümmten Verlauf in dem Polyamid 120 aufweisen. Von unten in der Fig. 2 wird Licht 141, beispielsweise einer Leuchtdiode (nicht dargestellt) auf die planparallele Schicht abgestrahlt. Das Licht 141 koppelt über die Grenzfläche in das Material 111 ein. Das eingekoppelte Licht 142 breitet sich in dem Material 111 aus, zunächst entlang der ursprünglichen Richtung. Wenn das eingekoppelte Licht 142 auf eine Glasfaser 130 oder eine Glaskugel 130 trifft, ist die Wahrscheinlichkeit hoch, dass das Licht 142 gebrochen, also abgelenkt oder gestreut wird. Dies ist beispielhaft für drei Lichtstrahlen dargestellt, die nach dem Streuvorgang als gestreutes Licht 143 bezeichnet werden und gestrichelt dargestellt sind. Das gestreute Licht 143 breitet sich insbesondere in einer von der ursprünglichen Richtung abweichenden Richtung in dem Material 111 aus. Ein gestreuter Lichtstrahl 143 kann auch ein weiteres Mal auf eine Glasfaser 130 oder Glaskugel 130 treffen und erneut gestreut werden. Es hängt insbesondere von dem totalen Streuquerschnitt oder der mittleren freien Weglänge des Materials 111 ab, wie häufig ein eingekoppelter Lichtstrahl 142 beim Durchstrahlen des Materials 111 gestreut wird. Je häufiger ein Lichtstrahl 142, 143 gestreut wird, umso homogener wird ein Bedienknebel 100 (siehe Fig. 1 oder 4) von einer Beleuchtungseinrichtung 140 (siehe Fig. 3) ausgeleuchtet.

Fig. 3 zeigt schematisch eine quaderförmige Platte 151 aus einem Material 111 mit einem bestimmten totalen Streuquerschnitt. Das Material 111 kann beispielsweise für den Grundkörper 110 des Bedienelements 100 der Fig. 1 verwendet werden. Eine Beleuchtungseinrichtung 140, die hier als ein Laser ausgebildet ist, sendet einen kollimierten Lichtstrahl 141 aus. Der Lichtstrahl 141 trifft auf eine quaderförmige Platte 151, die beispielsweise aus dem Material 111 der Fig. 1 oder 2 besteht. Beim Durchstrahlen der Platte 151 wird der Lichtstrahl 141 gestreut. Der Lichtstrahl 141 breitet sich daher nach der Platte 151 nicht mehr kollinear, sondern kegelförmig in einem Streulichtkegel mit Öffnungswinkel α aus. Das gestreute Licht 143 beleuchtet daher auf einer nachfolgenden Platte 152 beispielsweise eine kreisförmige Fläche anstelle eines einzigen Punkts. Je größer der Öffnungswinkel α des Streulichtkegels ist, umso größer ist der totale Streuquerschnitt des Materials 111. Dabei kann auch eine Intensität des Streulichts innerhalb des Streulichtkegels variieren. Bevorzugt weist das Material einen so großen totalen Streuquerschnitt auf, dass der Streulichtkegel einen Öffnungswinkel α von annähernd 90° aufweist, wobei die Intensität des Streulichts im Streulichtkegel nicht mehr als um einen Faktor 100 variiert. Beispielsweise ist die Intensität des Streulichts in Durchstrahlrichtung, also bei α = 0°, 5 W/m² und die Intensität des Streulicht bei α = 89° ist 0,05 W/m².

Fig. 4 zeigt eine schematische Ansicht eines Ausführungsbeispiels eines Haushaltsgeräts 200 mit drei Bedienelementen 100, die an einer vorderen Bedienblende des Haushaltsgeräts 200 angeordnet sind. Das Haushaltsgerät 200 ist hier beispielhaft als ein Backofen ausgebildet. Die drei Bedienelemente 100 sind als Drehknebel, wie der in der Fig. 1 dargestellte Drehknebel 100, ausgebildet und weisen auf ihrer von dem Backofen 200 weg gerichteten Seite eine Einrichtung 112 auf. Die Drehknebel 100 sind jeweils mit einer Beleuchtungseinrichtung 140, die hier nicht sichtbar hinter den Drehknebeln angeordnet ist, hinterleuchtbar. In dem dargestellten Beispiel ist lediglich der rechte Drehknebel 100 nicht in der Ruhestellung. Der Backofen 200 ist beispielhaft derart konfiguriert, dass eine jeweilige Beleuchtungseinrichtung 140 angesteuert wird, wenn ein jeweiliger Drehknebel 100 aus seiner Ruheposition gebracht wird, um eine bestimmte Funktion des Backofens 200 auszuwählen. Da dies vorliegend nur auf den rechten Drehknebel 100 zutrifft, leuchtet nur dieser, was an dem gestreuten Licht 143 erkennbar ist. Durch das Streulicht 143 in Verbindung mit der Einrichtung 112 lässt sich die Einstellung des Drehknebels 100 auch von größerer Entfernung schnell und sicher ablesen.

Obwohl die vorliegende Erfindung anhand von Ausführungsbeispielen beschrieben wurde, ist sie vielfältig modifizierbar.

Insbesondere ist eine große Vielzahl weiterer Formen für das Bedienelement als auch für die Einrichtung zum Bereitstellen von Mustern möglich.

### Verwendete Bezugszeichen:

- 100: Bedienelement
- 110: Grundkörper
- 111: Material
- 112: Einrichtung
- 120: Matrix
- 130: Füllstoff
- 140: Beleuchtungseinrichtung
- 141: Licht
- 142: eingekoppeltes Licht
- 143: gestreutes Licht
- 151: Platte
- 152: Platte
- 200: Haushaltsgerät
- α: Streuwinkel

## Patentansprüche

1. Bedienelement (100) für ein Haushaltsgerät (200), mit einem Grundkörper (110) aufweisend ein Material (111), welches eine Matrix (120) und einen in die Matrix (120) eingebetteten Füllstoff (130) umfasst, wobei die Matrix (120) eine transparente Kunststoffmatrix ist und **dadurch gekennzeichnet, dass** der Füllstoff (130) einen Gewichtsanteil von 5% - 30% an dem Material (111) hat und zum Erhöhen einer mechanischen Festigkeit des Materials (111) und zum Erhöhen einer chemischen Resistenz des Materials (111) eingerichtet ist und ferner dazu eingerichtet ist, eine vorgegebene Lichtstreuung für in das Material (111) eingekoppeltes Licht (142) bereitzustellen.

2. Bedienelement nach Anspruch 1, **dadurch gekennzeichnet, dass** der Grundkörper (110) aus dem Material (111) besteht.

3. Bedienelement nach Anspruch 1 oder 2, **dadurch gekennzeichnet, dass** die transparente Kunststoffmatrix (120) aus Polyamid besteht.

4. Bedienelement nach einem der Ansprüche 1 - 3, **dadurch gekennzeichnet, dass** der Füllstoff (130) aus Glasfasern, Glaskugeln, Kohlefasern, Aramidfasern, Pigmenten und/oder mineralischen Füllstoffen besteht.

5. Bedienelement nach einem der Ansprüche 1 - 4, **dadurch gekennzeichnet, dass** die mechanische Festigkeit des Materials (111) ein Elastizitätsmodul größer als 3300 MPa aufweist.

6. Bedienelement nach einem der Ansprüche 1 - 5, **dadurch gekennzeichnet, dass** das Material (111) eine dauerhafte Temperaturbeständigkeit von über 100°C, insbesondere bis zu 110°C, und eine kurzzeitige Temperaturbeständigkeit von über 120°C aufweist.

7. Bedienelement nach einem der Ansprüche 1 - 6, **dadurch gekennzeichnet, dass** der Füllstoff (130) aus Glasfasern mit einem Durchmesser von 10 - 20 µm besteht.

8. Bedienelement nach einem der Ansprüche 1 - 7, **dadurch gekennzeichnet, dass** der Füllstoff (130) einen Gewichtsanteil von 10% - 20% an dem Material (111) hat.

9. Bedienelement nach einem der Ansprüche 1 - 8, **dadurch gekennzeichnet, dass** der Füllstoff (130) einen Gewichtanteil von 12% -17% an dem Material (111) hat.

10. Bedienelement nach einem der Ansprüche 1 - 9, **dadurch gekennzeichnet, dass** eine Beleuchtungseinrichtung (140) zum Hinterleuchten des Grundkörpers (110) vorgesehen ist.

11. Bedienelement nach einem der Ansprüche 1 - 10, **dadurch gekennzeichnet, dass** eine Einrichtung (112) zum Bereitstellen von Mustern, insbesondere Zahlen, Buchstaben und/oder Symbole, auf dem Grundkörper (110) vorgesehen ist, wobei die Muster durch in den Grundkörper (110) eingekoppeltes Licht beleuchtbar sind.

12. Bedienelement nach einem der Ansprüche 1 - 11, **dadurch gekennzeichnet, dass** das Bedienelement (100) als ein Schieberegler, ein Bedienknebel, ein Drehknebel, ein Taster, ein Schalter und/oder ein Knopf ausgebildet ist.

13. Haushaltsgerät (200) mit zumindest einem Bedienelement (100) nach einem der Ansprüche 1 - 12.

14. Haushaltsgerät nach Anspruch 13, **dadurch gekennzeichnet, dass** das Haushaltsgerät (200) als ein Gargerät und/oder ein wasserführendes Haushaltsgerät ausgebildet ist.

## Claims

1. Operating element (100) for a household appliance (200), with a base body (110) having a material (111), which comprises a matrix (120) and a filler (130) embedded in the matrix (120), wherein the matrix (120) is a transparent plastic matrix and **characterised in that** the filler (130) has a percentage by weight of 5% - 30% of the material (111) and is designed to increase a mechanical strength of the material (111) and to increase a chemical resistance of the material (111) and is also designed to provide a predefined scattering for light (142) coupled into the material (111).

2. Operating element according to claim 1, **characterised in that** the base body (110) is made of the material (111).

3. Operating element according to claim 1 or 2, **characterised in that** the transparent plastic matrix (120) is made of polyamide.

4. Operating element according to one of claims 1 - 3, **characterised in that** the filler (130) consists of glass fibres, glass balls, carbon fibres, aramid fibres, pigments and/or mineral fillers.

5. Operating element according to one of claims 1 - 4, **characterised in that** the mechanical strength of the material (111) has a modulus of elasticity greater than 3300 MPa.

6. Operating element according to one of claims 1 - 5, **characterised in that** the material (111) has a long-term temperature resistance of above 100°C, in particular up to 110°C, and a short-term temperature resistance of above 120°C.

7. Operating element according to one of claims 1 - 6, **characterised in that** the filler (130) consists of glass fibres with a diameter of 10 - 20 µm.

8. Operating element according to one of claims 1 - 7, **characterised in that** the filler (130) has a percentage by weight of 10% - 20% of the material (111).

9. Operating element according to one of claims 1 - 8, **characterised in that** the filler (130) has a percentage by weight of 12% - 17% of the material (111).

10. Operating element according to one of claims 1 - 9, **characterised in that** a lighting facility (140) is provided to light the base body (110) from the rear.

11. Operating element according to one of claims 1 - 10, **characterised in that** a facility (112) is provided to supply patterns, in particular numbers, letters and/or symbols, on the base body (110), wherein it is possible for the patterns to be lit by light coupled into the base body (110).

12. Operating element according to one of claims 1 - 11, **characterised in that** the operating element (100) is configured as a slide control, an operating knob, a rotating knob, a key, a switch and/or a button.

13. Household appliance (200) with at least one operating element (100) according to one of claims 1 - 12.

14. Household appliance according to claim 13, **characterised in that** the household appliance (200) is configured as a cooking appliance and/or a water-conducting household appliance.

## Revendications

1. Élément de commande (100) pour un appareil électroménager (200), comprenant un corps de base (110) présentant une matière (111), laquelle comprend une matrice (120) et une matière de charge (130) intégrée à la matrice (120), dans lequel la matrice (120) est une matrice transparente en matière synthétique et **caractérisé en ce que** la matière de charge (130) constitue 5% à 30% du poids de la matière (111) et sert à augmenter la solidité mécanique de la matière (111) et sert à augmenter la résistance chimique de la matière (111), et sert en outre à procurer une diffusion de lumière prédéfinie pour la lumière (142) injectée dans la matière (111).

2. Élément de commande selon la revendication 1, **caractérisé en ce que** le corps de base (110) est constitué de la matière (111).

3. Élément de commande selon la revendication 1 ou 2, **caractérisé en ce que** la matière transparente en matière synthétique (120) est constituée de polyamide.

4. Élément de commande selon l'une des revendications 1-3, **caractérisé en ce que** la matière de charge (130) consiste en fibres de verre, billes de verre, fibres de carbone, fibres aramides, pigments et/ou en matières de charge minérales.

5. Élément de commande selon l'une des revendications 1-4, **caractérisé en ce que** la solidité mécanique de la matière (111) présente un module d'élasticité supérieur à 3300 MPa.

6. Élément de commande selon l'une des revendications 1-5, **caractérisé en ce que** la matière (111) présente une résistance durable à la température de plus de 100°C, en particulier jusqu'à 110°C, et une résistance brève à la température de plus de 120°C.

7. Élément de commande selon l'une des revendications 1-6, **caractérisé en ce que** la matière de charge (130) est constituée de fibres de verre d'un diamètre de 10-20 µm.

8. Élément de commande selon l'une des revendications 1-7, **caractérisé en ce que** la matière de charge (130) constitue 10% à 20% du poids de la matière (111).

9. Élément de commande selon l'une des revendications 1-8, **caractérisé en ce que** la matière de charge (130) constitue 12% à 17% du poids de la matière (111).

10. Élément de commande selon l'une des revendications 1-9, **caractérisé en ce qu'**un dispositif d'éclairage (140) est prévu pour le rétro-éclairage du corps de base (110).

11. Élément de commande selon l'une des revendications 1-10, **caractérisé en ce qu'**un dispositif (112) est prévu pour la fourniture d'échantillons, en particulier de chiffres, de lettres et/ou de symboles, sur le corps de base (110), les échantillons pouvant être éclairés par de la lumière injectée dans le corps de base (110).

12. Élément de commande selon l'une des revendications 1-11, **caractérisé en ce que** l'élément de commande (100) est réalisé en tant que curseur, bouton de commande, bouton rotatif, touche, commutateur et/ou que de bouton.

13. Appareil électroménager (200) comprenant au moins un élément de commande (100) selon l'une des revendications 1-12.

14. Appareil électroménager selon la revendication 13, **caractérisé en ce que** l'appareil électroménager (200) est réalisé en tant qu'appareil de cuisson et/ou appareil électroménager à circulation d'eau.
